# EUROPEAN PATENT APPLICATION

(11) **EP 4 451 693 A1**
(43) Date of publication of application: **23.10.2024**
(21) Application number: 23747227.9
(22) Date of filing: 16.01.2023
(51) Int. Cl.: H04N 21/458, H04N 21/472, H04N 21/4725, H04N 21/858, H04N 21/2187, H04N 21/2225, H04N 21/274

(54) **ELECTRONIC DEVICE AND OPERATION METHOD OF ELECTRONIC DEVICE**

(30) Priority: 28.01.2022 KR 20220013615
(71) Applicant: Samsung Electronics Co., Ltd, Suwon-si, Gyeonggi-do 16677 (KR)
(72) Inventor: SIM, Jeongmin, Suwon-si, Gyeonggi-do 16677 (KR)
(74) Representative: Appleyard Lees IP LLP
(86) International application number: PCT/KR2023/000722
(87) International publication number: WO 2023/146185

(57) **Abstract**

Disclosed is an electronic device including receiving, from a user device, information on the address of a user-customized channel, obtaining, in response to a user input for selecting the user-customized channel, information on one or more pieces of content included in the user-customized channel from a channel service server computer by referring to the information on the address of the user-customized channel, and displaying the one or more pieces of content by referring to the information on the one or more pieces of content, wherein the one or more pieces of content included in the user-customized channel includes video content uploaded to the channel service server computer by a user and at least one of live broadcast content transmitted by a broadcast station server, video on demand (VOD) content provided by a streaming server, and live stream video content provided by a streaming server.

## Description

### Technical Field

Embodiments of the present disclosure relate to an electronic device and an operation method of the electronic device.

### Background Art

An electronic device has a function of displaying an image that a user can watch. The user may watch broadcasting through the electronic device. The electronic device displays, on a display, broadcasting selected by the user from among broadcast signals transmitted from a broadcasting station.

Recently, due to the spread and technological development of electronic devices, the amount of content provided to electronic devices increases, and the types of content provided also become diverse. For example, a user may use not only a broadcast program provided on a broadcast receiving device such as a TV, but also may use an Internet-based video service such as an over the top (OTT) service, which provides various contents such as dramas and movies through the Internet.

However, as the type and number of contents that an electronic device is capable of selectively receiving and displaying are provided from various sources, the user may experience inconvenience in selecting one of numerous contents. Therefore, there is a need for development of providing channel information specialized for user needs.

### Disclosure

### Technical Problem

Embodiments of the present disclosure provide an electronic device and method for improving accessibility by creating a user-customized broadcast channel and sharing the broadcast channel with other users.

The objects to implement in the present disclosure are not limited to the technical objects described above and other objects that are not stated herein will be clearly understood by those skilled in the art from the following specifications.

### Technical Solution

To achieve the above objects, an electronic device according to an embodiment includes a display, a memory configured to store one or more instructions, and a processor configured to execute the one or more instructions stored in the memory, wherein the processor is configured to execute the one or more instructions to receive address information for a user-customized channel from a user device, obtain information about one or more contents provided in the user-customized channel from a channel service server computer with reference to the address information for the user-customized channel according to a user input for selecting the user-customized channel, and display the one or more contents with reference to the information about the one or more contents, and the one or more contents provided in the user-customized channel include at least one of live broadcast content transmitted from a broadcasting station server, video on demand (VOD) content provided by a streaming server, and live streaming video content provided by the streaming server, and video content uploaded to the channel service server computer by the user.

The address information for the user-customized channel may include uniform resource locator (URL) information.

The processor may be configured to execute the one or more instructions to obtain a content schedule of the one or more contents provided through the user-customized channel from the channel service server computer with reference to the address information for the user-customized channel and obtain the one or more contents from a channel service server computer to which the video content is uploaded by the user, the broadcasting station server, or the streaming server according to the content schedule.

The user device may include a first user device and a second user device, the user-customized channel may be created by accessing the channel service server computer through the first user device, and the processor may be configured to execute the one or more instructions to receive the address information for the user-customized channel from the channel service server computer through the second user device.

The processor may be configured to execute the one or more instructions to directly receive the address information for the user-customized channel from the channel service server computer and obtain information about the one or more contents provided in the user-customized channel from the channel service server computer with reference to the address information for the user-customized channel according to the user input for selecting the user-customized channel.

The user device may include a first user device and a second user device, the user-customized channel may be created by accessing the channel service server computer through the first user device, the address information for the user-customized channel may be shared from the channel service server computer to the second user device through the first user device, and the processor may be configured to execute the one or more instructions to receive the shared address information for the user-customized channel from the second user device.

User authentication (log in) may be requested from an authentication server to access the user device granted access to the electronic device, and information about the one or more contents provided in the user-customized channel may be synchronized through the user device.

Requesting user authentication from the authentication server may include requesting authentication based on a single sign on (SSO) server.

The one or more contents provided in the user-customized channel may be sequentially displayed.

Each of the one or more contents provided in the user-customized channel may be displayed at its preset designated time.

To achieve the above objects, an operation method of an electronic device according to an embodiment includes receiving address information for a user-customized channel from a user device, obtaining information about one or more contents provided in the user-customized channel from a channel service server computer with reference to the address information for the user-customized channel according to a user input for selecting the user-customized channel, and displaying the one or more contents with reference to the information about the one or more contents, wherein the one or more contents provided in the user-customized channel include at least one of live broadcast content transmitted from a broadcasting station server, video on demand (VOD) content provided by a streaming server, and live streaming video content provided by the streaming server, and video content uploaded to the channel service server computer by the user.

The address information for the user-customized channel may include uniform resource locator (URL) information.

The obtaining of the information about the one or more contents provided in the user-customized channel may include obtaining a content schedule of the one or more contents provided through the user-customized channel from the channel service server computer with reference to the address information for the user-customized channel, and obtaining the one or more contents from a channel service server computer to which the video content is uploaded by the user, the broadcasting station server, or the streaming server according to the content schedule.

The user device may include a first user device and a second user device, the user-customized channel may be created by accessing the channel service server computer through the first user device, and the receiving of the address information for the user-customized channel may include receiving the address information for the user-customized channel from the channel service server computer through the first user device.

The receiving of the address information for the user-customized channel may include directly receiving the address information for the user-customized channel from the channel service server computer.

The user device may include a first user device and a second user device, the user-customized channel may be created by accessing the channel service server computer through the first user device, the receiving of the address information for the user-customized channel may include sharing the address information for the user-customized channel from the channel service server computer to the second user device through the first user device.

The obtaining of the information about the one or more contents may include requesting user authentication from an authentication server to access the user device granted access to the electronic device, and synchronizing information about the one or more contents provided in the user-customized channel through the user device.

Requesting user authentication from the authentication server may include requesting authentication based on a single sign on (SSO) server.

The one or more contents provided in the user-customized channel may be sequentially displayed.

According to an embodiment, provided is a computer-readable recording medium having recorded thereon a program for executing the operation method of an electronic device, on a computer.

### Description of Drawings

FIG. 1 is a schematic diagram showing a system for playing a video according to an embodiment.
FIG. 2 is a flowchart for explaining a method of playing a video in a user-customized channel according to an embodiment.
FIG. 3 is a schematic diagram showing an example of a system for playing a video according to an embodiment.
FIG. 4 is a schematic diagram showing an example of a system for playing a video according to an embodiment.
FIG. 5 is a schematic diagram showing an example of a system for playing a video according to an embodiment.
FIG. 6 is a schematic diagram illustrating an authentication system for a user device to communicate with an electronic device that plays a video, according to an embodiment.
FIG. 7 is a diagram for explaining a method of adding content to a user-customized channel according to an embodiment.
FIG. 8 is a diagram for explaining a method of adding content to a user-customized channel according to an embodiment.
FIG. 9 is a diagram for explaining a method of adding content to a user-customized channel according to an embodiment.
FIG. 10 is a diagram for explaining a method of adding content to a user-customized channel according to an embodiment.
FIG. 11 is a diagram for explaining a method of arranging contents in a user-customized channel according to an embodiment.
FIG. 12 is a schematic diagram showing an example of a system for playing a video according to an embodiment.
FIG. 13 is a diagram for explaining a schedule of contents provided through a user-customized channel according to an embodiment.
FIG. 14 is a block diagram of an electronic device according to an embodiment.
FIG. 15 is a block diagram illustrating in detail the configuration of an electronic device according to an embodiment.

### Mode for Invention

Embodiments of the present disclosure are described in detail for those of ordinary skill in the art to easily implement with reference to the accompanying drawings. However, the present disclosure may be implemented in various different forms and is not limited to these embodiments. To clearly describe the present disclosure, a portion without concerning to the description is omitted in the drawings, and like reference numerals in the specification denote like elements.

The terms used herein are general terms that have been widely used in the technical art to which the present disclosure pertains. However, some of the terms used herein may mean various other terms depending on intentions of technicians in this art, precedents, or new technologies. Therefore, the terms used in the present disclosure should not be interpreted only by the name of the term, but should be interpreted based on the meaning of the term and the overall content of the present disclosure.

It will be understood that although the terms first, second, third, etc. may be used herein to describe various elements, these elements should not be limited by these terms. These terms are only used to distinguish one element from another element.

The term used herein is for the purpose of describing particular embodiments only and is not intended to be limiting of the present disclosure. The singular expressions include the plural expressions unless clearly specified otherwise in context. In the specification, when it is described that a certain portion is "connected" to another portion, it should be understood that the certain portion may be directly connected to another portion or electrically connected to another portion via another portion in the middle. When a certain portion "includes" a certain component, this indicates that the portion may further include another component instead of excluding another component unless there is no different disclosure.

As used in this specification, particularly in the claims, "the" and similar indicators may refer to both the singular and the plural. The operations of all methods described herein may be performed in any suitable order unless otherwise indicated herein or otherwise clearly contradicted by context. The present disclosure is not limited to the described order of the operations.

Phrases such as "in some embodiments" or "in an embodiment" in various places in this specification do not necessarily all refer to the same embodiment.

The present disclosure may be described in terms of functional block components and various processing operations. Some or all of these functional blocks may be implemented in various numbers of hardware and/or software configurations that perform specific functions. For example, the functional blocks of the present disclosure may be implemented by one or more microprocessors, or may be implemented by circuit configurations for certain functions. For example, functional blocks of the present disclosure may be implemented in various programming or scripting languages. Functional blocks may be implemented as algorithms executed by one or more processors. The present disclosure may employ existing technologies for electronic environment setup, signal processing, and/or data processing. Terms such as "mechanism," "element," "means," and "configuration" may be used broadly and are not limited to mechanical and physical components.

The connecting lines, or connectors shown in the drawings presented are intended to represent exemplary functional relationships and/or physical or logical couplings between the various elements. Many alternative or additional functional relationships, physical connections or logical connections, may be present in a practical device.

Throughout the specification, an application may refer to an application program executed by a display device. An application according to an embodiment may refer to software executed by a display device in response to a received user input.

Throughout the specification, the "content" may refer to digital information displayed on the display unit of a display device. Content according to an embodiment includes video content (e.g., TV program video, video on demand (VOD), user-created contents (UCC), music video, or YouTube video), still image content (e.g., photo or pictures), but is not limited thereto.

A portion of a display of a display device, which actually outputs content, may be referred to as a screen.

Hereinafter, the present disclosure will be described in detail with reference to the attached drawings.

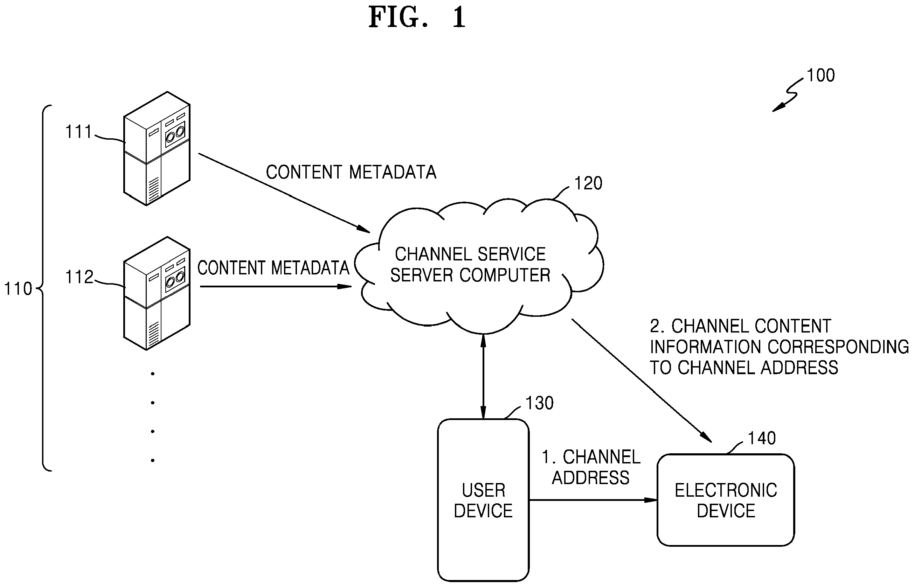

FIG. 1 is a schematic diagram showing a system for playing a video according to an embodiment.

Referring to FIG. 1, according to an embodiment, a system 100 for playing a video may include one or more content providing servers 110, a channel service server computer 120, a user device 130, and an electronic device 140.

The one or more content providing servers 110 may include servers for communicating with the channel service server computer 120, the user device 130, and the electronic device 140. In detail, the one or more content providing servers 110 may provide one or more contents to the user device 130 or the electronic device 140 and provide content metadata corresponding to the content to the channel service server computer 120. The content metadata may include, for example, one or more of genre information, director information, performer information, broadcast time information, and content provider (CP) information.

The one or more content providing servers 110 may include a first server 111 and a second server 112 that provide different types of contents. For example, the first server 111 and the second server 112 may each correspond to at least one of a broadcasting station server, an over the top (OTT) service providing server, and a streaming server. That is, the one or more content providing servers 110 may refer to different sources that provide content.

The broadcasting station server refers to a server that transmits live broadcast content through a certain channel. In this case, the channel may mean a broadcast channel, and the user of the electronic device 140 may watch a broadcast program by selecting a certain channel.

The OTT service providing server is a server that provides an OTT service, and the OTT service refers to a service that provides various media contents such as dramas and movies through the Internet. Here, the Top refers to a set-top box connected to a TV, but recently, the OTT service may be provided by an electronic device such as a PC and a smartphone regardless of presence or absence of a set-top box and may also include all Internet-based video services additionally provided by existing broadcasters or telecommunications companies.

The streaming server may provide video on demand (VOD) content and/or live streaming video content providing services to a user. For example, when the electronic device 140 is a TV, the user may receive a certain streaming movie service through channel '1', and when the user selects channel '1' on the electronic device 140, the user may watch movie content provided by a certain streaming movie providing service.

The one or more content providing servers 110 may provide content metadata to the channel service server computer 120. The one or more content providing servers 110 may include a server that provides metadata about content, separately from servers 111 and 112 that provide the content.

The channel service server computer 120 may represent a computer that provides a website programmed to create a channel. However, this is merely an example, and the technical spirit of the present disclosure is not limited thereto. For example, the user device 130 may access the channel service server computer 120 through an application that creates a channel.

The channel service server computer 120 may receive content metadata from the one or more content providing servers 110. The content metadata may include information about content provided by the one or more content providing servers 110. For example, when the first server 111 is a broadcasting station server, the channel service server computer 120 may receive electronic program guide (EPG) information including information about broadcast programs from the first server 111. For example, the EPG information may include information about a channel name, a program title, a broadcast time, a broadcast episode, and the like. The user may access the channel service server computer 120 through the user device 130, and thus may create a user-customized channel using the content metadata received by the channel service server computer 120. The user may configure a broadcast list of user-customized channels by selecting preferred content from among certain content transmitted to the channel service server computer 120 from the one or more content providing servers 110.

The channel service server computer 120 may receive various video contents such as videos and files, stored in the user device 130 from the user device 130. In this case, the user device 130 may be a mobile phone, and the user may upload video content stored in the mobile phone to the channel service server computer 120. A user of the electronic device 140 may watch the video content uploaded to the channel service server computer 120 through the electronic device 140. For example, when the electronic device 140 is a TV, the user may receive the video content uploaded to the channel service server computer 120 through channel '2', and when the user selects a channel '2' on the electronic device 140, the user may watch the corresponding video content.

According to an embodiment, the user may create a user-customized channel by accessing the channel service server computer 120 by using the user device 130. The user may add at least one content to the user-customized channel by using the user device 130.

The user device 130 may receive channel address data corresponding to the user-customized channel from the channel service server computer 120. The channel address data may include uniform resource locator (URL) information.

The electronic device 140 may receive the channel address data from the user device 130. The channel address data may correspond to a certain user-customized channel. Accordingly, the electronic device 140 may receive information about a certain user-customized channel corresponding to the channel address data from the channel service server computer 120.

That is, according to a user input for selecting a certain user-customized channel, the electronic device 140 may receive address information for the corresponding user-customized channel from the user device 130. The electronic device 140 may obtain information about one or more contents provided in the user-customized channel from the channel service server computer 120 by referring to address information about the user-customized channel. The electronic device 140 may display one or more contents with reference to information about one or more obtained contents.

For example, the electronic device 140 may receive information such as a content list, a content playback order, and a content playback time in a certain user-customized channel corresponding to the channel address data. The electronic device 140 may play a content in a certain user-customized channel by using the received information.

According to an embodiment, the electronic device 140 may be a display device for playing content and may be implemented as various electronic devices such as a desktop, a tablet PC, a TV, a laptop computer, or a mobile phone. The electronic device 140 may be fixed or mobile and may be a digital broadcasting receiver for receiving digital broadcasting.

The electronic device 140 according to an embodiment may be implemented not only as a flat display device, but also as a curved display device, which is a screen with a curvature, or a flexible display device with an adjustable curvature. The output resolution of the electronic device may include, for example, a higher resolution than high definition (HD), Full HD, Ultra HD, or Ultra HD. The electronic device 140 according to an embodiment may output content (image, sound data) input through various external input sources (e.g., set-top box).

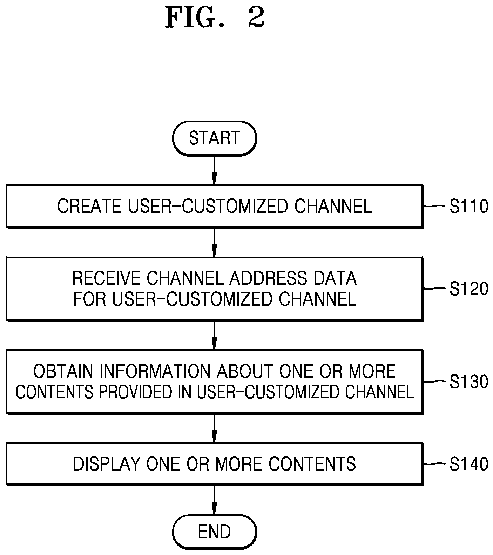

FIG. 2 is a flowchart for explaining a method of playing a video in a user-customized channel according to an embodiment.

Referring to FIG. 2, in operation S110, a user may create a user-customized channel by accessing the channel service server computer 120 through the user device 130. In detail, the user may create the user-customized channel by accessing a programmed website provided by the channel service server computer 120. The programmed website may be provided to create and produce the user-customized channel.

A method of accessing the channel service server computer 120 is merely an example, and the technical spirit of the present disclosure is not limited thereto. For example, the user may access the channel service server computer 120 by executing a channel creation application in the user device 130.

The user may add content provided by the one or more content providing servers 110 to the user-customized channel. The user may check contents by using content metadata provided by the one or more content providing servers 110 in the programmed website provided by the channel service server computer 120. The user may select at least one content from among the provided contents and add the selected content to the user-customized channel.

However, this convent providing path is merely an example, and the technical spirit of the present disclosure is not limited thereto. For example, the user may upload video content stored in the user device 130 to the channel service server computer 120. The user may select the uploaded video content and add the video content to the user-customized channel.

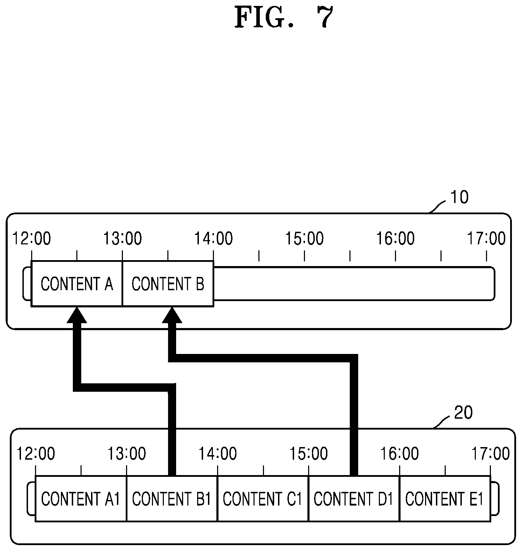

Details related to adding content to the user-customized channel will be described in detail below with reference to FIGS. 7 to 11.

Accordingly, the user-customized channel may include content provided by the one or more content providing servers 110. For example, the user-customized channel may include content provided from at least one of a broadcasting station server, an OTT service providing server, and a streaming server. As another example, the user-customized channel may include video content uploaded from the user device 130 to the channel service server computer 120.

The channel service server computer 120 may store information about the user-customized channel. The information about the user-customized channel may include a content list, a content playback order, and a content playback time in the user-customized channel, and channel address data corresponding to the user-customized channel.

In operation S120, the electronic device 140 according to an embodiment may receive the channel address data for the user-customized channel from the user device 130.

The channel address data corresponding to the user-customized channel may include uniform resource locator (URL) information. The user may obtain information about a certain user-customized channel corresponding to the URL information by using the URL information.

The channel address data corresponding to the user-customized channel is stored in the channel service server computer 120. The user device 130 may receive channel address data corresponding to the user-customized channel from the channel service server computer 120.

For example, the user may create a user-customized channel by accessing the channel service server computer 120 by using the user device 130, and simultaneously, the user device 130 may receive channel address data corresponding to the user-customized channel from the channel service server computer 120.

Then, the electronic device 140 according to an embodiment may receive the channel address data corresponding to the user-customized channel from the user device 130.

In operation S130, the electronic device 140 may obtain information about one or more contents provided in the user-customized channel from the channel service server computer 120.

The electronic device 140 according to an embodiment may receive the channel address data corresponding to a certain user-customized channel from the user device 130. The electronic device 140 may receive information about one or more contents provided in the user-customized channel corresponding to the channel address data from the channel service server computer 120.

In operation S140, the electronic device 140 may display one or more contents provided in the user-customized channel.

That is, the electronic device 140 according to an embodiment may receive the channel address data corresponding to a certain user-customized channel from the user device 130. The electronic device 140 may receive information about one or more contents provided in the user-customized channel corresponding to the channel address data from the channel service server computer 120. The electronic device 140 may play one or more contents provided in the user-customized channel.

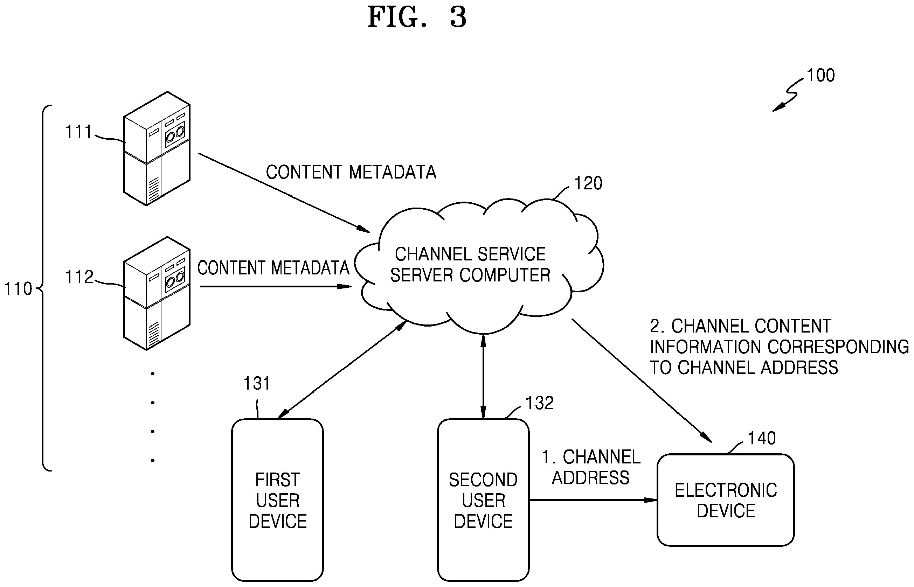

FIG. 3 is a schematic diagram showing an example of a system for playing a video according to an embodiment.

For convenience of explanation, a description will be given in terms of differences from those described with reference to FIG. 1.

Referring to FIG. 3, the user device 130 may include a first user device 131 and a second user device 132.

According to an embodiment, a user may create a user-customized channel by accessing the channel service server computer 120 by using the first user device 131. In this case, the user may mean a channel creator. The user may add at least one content to the user-customized channel by using the first user device 131.

In this case, the channel service server computer 120 may receive content metadata from the one or more content providing servers 110. The channel service server computer 120 may receive various video contents such as videos and files stored in the first user device 131 or the second user device 132, from the first user device 131 or the second user device 132. The user may check the contents received through the channel service server computer 120 and add at least one content to the user-customized channel by using the first user device 131.

The second user device 132 may receive channel address data corresponding to the user-customized channel created using the first user device 131 from the channel service server computer 120. The channel address data may include URL information.

The electronic device 140 may receive the channel address data from the second user device 132. The channel address data may correspond to a certain user-customized channel created using the first user device 131. Accordingly, the electronic device 140 may receive information about the user-customized channel corresponding to the channel address data from the channel service server computer 120.

That is, according to a user input for selecting a certain user-customized channel created using the first user device 131, the electronic device 140 may receive address information for the corresponding user-customized channel from the second user device 132. The electronic device 140 may obtain information about one or more contents provided in the user-customized channel from the channel service server computer 120 with reference to address information about the user-customized channel. The electronic device 140 may display one or more contents with reference to information about one or more obtained contents.

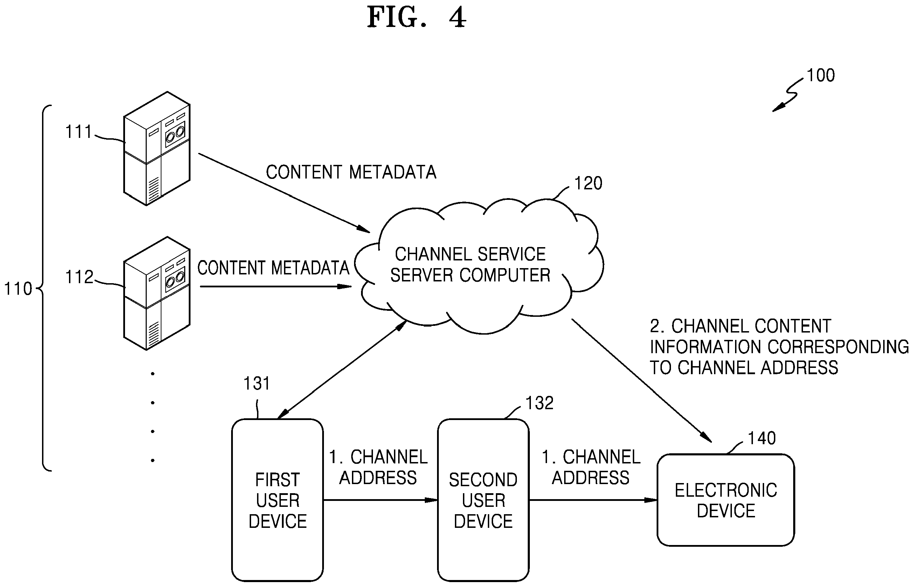

FIG. 4 is a schematic diagram showing an example of a system for playing a video according to an embodiment. For convenience of explanation, a description will be given in terms of differences from those described with reference to FIG. 1.

Referring to FIG. 4, the user device 130 may include a first user device 131 and a second user device 132.

According to an embodiment, a user may create a user-customized channel by accessing the channel service server computer 120 by using the first user device 131. In this case, the user may mean a channel creator. The user may add at least one content to the user-customized channel by using the first user device 131.

In this case, the channel service server computer 120 may receive content metadata from the one or more content providing servers 110. The channel service server computer 120 may receive various video contents such as videos and files stored in the first user device 131 or the second user device 132, from the first user device 131 or the second user device 132. The user may check the contents received through the channel service server computer 120 and add at least one content to the user-customized channel by using the first user device 131.

The first user device 131 may receive channel address data corresponding to the user-customized channel created using the first user device 131 from the channel service server computer 120. The channel address data may include URL information.

The second user device 132 may receive the channel address data from the first user device 131. The channel address data corresponding to the user-customized channel may be shared from the channel service server computer 120 to the second user device 132 through the first user device 131.

A method in which the first user device 131 shares the channel address data with the second user device 132 does not limit the technical spirit of the present disclosure. For example, the channel address data may be transmitted to the second user device 132 through a messenger application, an email, or the like in the first user device 131.

The electronic device 140 may receive the channel address data from the second user device 132. The channel address data may correspond to a certain user-customized channel created using the first user device 131. Accordingly, the electronic device 140 may receive information about the user-customized channel corresponding to the channel address data from the channel service server computer 120.

That is, according to a user input for selecting a certain user-customized channel created using the first user device 131, the electronic device 140 may receive address information for the corresponding user-customized channel from the second user device 132. Address information for the corresponding user-customized channel may be information shared from the first user device 131 to the second user device 132. The electronic device 140 may obtain information about one or more contents provided in the user-customized channel from the channel service server computer 120 with reference to address information about the user-customized channel. The electronic device 140 may display one or more contents with reference to information about one or more obtained contents.

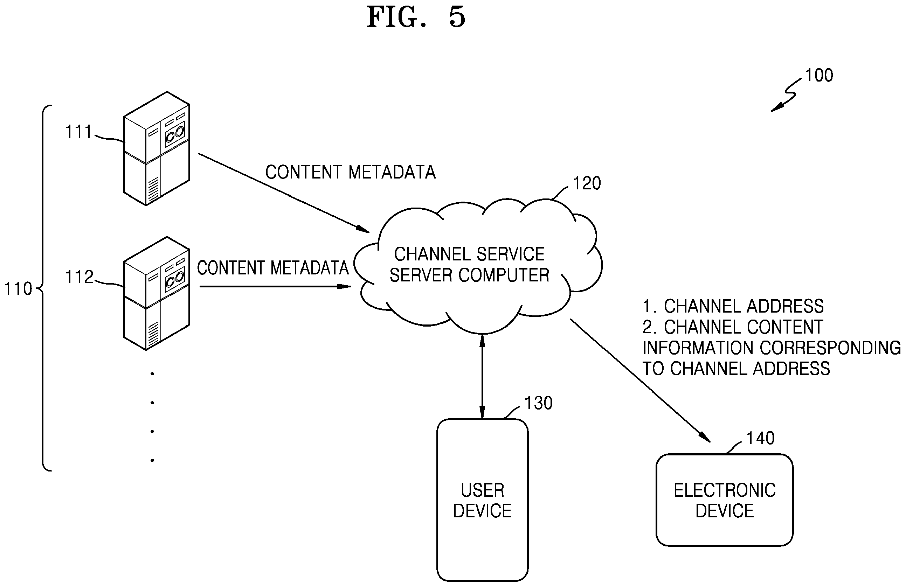

FIG. 5 is a schematic diagram showing an example of a system for playing a video according to an embodiment. For convenience of explanation, a description will be given in terms of differences from those described with reference to FIG. 1.

Referring to FIG. 5, the electronic device 140 may directly receive channel address data corresponding to the user-customized channel from the channel service server computer 120.

According to an embodiment, a user may create a user-customized channel by accessing the channel service server computer 120 by using the user device 130. The user may add at least one content to the user-customized channel by using the user device 130.

The electronic device 140 may directly receive the channel address data from the channel service server computer 120. The channel address data may include uniform resource locator (URL) information.

The channel address data may correspond to a certain user-customized channel. Accordingly, the electronic device 140 may receive information about a certain user-customized channel corresponding to the channel address data from the channel service server computer 120.

That is, according to a user input for selecting a certain user-customized channel, the electronic device 140 may directly receive address information for the corresponding user-customized channel from the channel service server computer 120. The electronic device 140 may obtain information about one or more contents provided in the user-customized channel from the channel service server computer 120 with reference to address information about the user-customized channel. The electronic device 140 may display one or more contents with reference to information about one or more obtained contents.

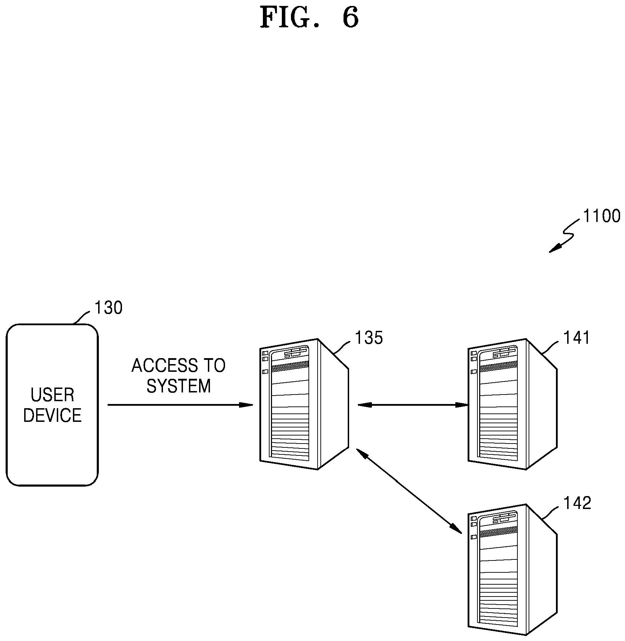

FIG. 6 is a schematic diagram illustrating an authentication system for a user device to communicate with an electronic device that plays a video, according to an embodiment.

Referring to FIG. 6, the user device 130 may be connected to the electronic device 140 by requesting user authentication from an authentication server. Requesting user authentication from the authentication server may mean requesting authentication based on a single sign on (SSO) server.

An authentication system 1100 according to an embodiment may include the user device 130, an SSO server 135, and electronic devices 141 and 142.

The user device 130 may provide necessary information to the user by executing an application or storing and managing data. According to an embodiment, the user device 130 may be a personal computer (PC) or a mobile device such as a laptop computer, a smartphone, or a wearable device, but is not limited thereto.

The SSO server 135 may issue authentication information for a single sign-on (SSO) service that enables access to multiple servers through a single user authentication process. The user device 130 may access a plurality of other electronic devices 141 and 142 connected to the SSO server 135 without a separate authentication process by achieving integrated authentication from the SSO server 135.

The user device 130 may be granted access to the electronic device 140 by requesting user authentication (log in) from the SSO server 135. Accordingly, the user device 130 granted access to the electronic device 140 may be connected to the electronic device 140. Through the user device 130, information about one or more contents provided in the user customized channel may be synchronized with the electronic device 140.

The electronic devices 141 and 142 may provide various types of information to a user. For example, the electronic devices 141 and 142 may provide a service for playing content provided in a user-customized channel.

FIG. 7 is a diagram for explaining a method of adding content to a user-customized channel according to an embodiment. For convenience of explanation, repeated descriptions are briefly given or omitted.

Referring to FIG. 7, according to an embodiment, the channel service server computer 120 may receive a first content meta data list 20 including metadata corresponding to one or more contents from a first content providing server from among the one or more content providing servers 110. The first content meta data list 20 may include metadata corresponding to content a1, metadata corresponding to content b1, metadata corresponding to content c1, metadata corresponding to content d1, and metadata corresponding to content e1. The first content meta data list 20 may include genre information, broadcast time information, and content information about content provided from the first content providing server.

The first content providing server may include information about a plurality of contents that are broadcast sequentially over time. For example, the first content providing server may be a broadcasting station server that transmits live broadcast content through a certain channel, or may be a streaming server that provides a live streaming video content service.

The user may check a list of content provided from the first content providing server through the first content meta data list 20 by accessing the channel service server computer 120. The user may check genre information, broadcast time information, and content information about the content provided from the first content providing server, but the information about the content is merely an example and the technical spirit of the present disclosure is not limited thereto.

A user may create a user-customized channel 10 by accessing the channel service server computer 120 through the user device 130. The user may add content provided from the first content providing server to the user-customized channel 10.

The user may add the selected content to the user-customized channel 10 by selecting at least one content from among the plurality of content provided from the first content providing server.

For example, the first content providing server may provide the channel service server computer 120 including metadata corresponding to one or more contents to the channel service server computer 120. The first content meta data list 20 may include genre information, broadcast time information, and content information for content provided by the first content providing server to the channel service server computer 120.

The user may create the user-customized channel 10 by accessing the channel service server computer 120 through the user device 130. The user may check information about the content provided through the first content meta data list 20 and add at least one content from among the plurality of content provided from the first content providing server to the user-customized channel 10.

In detail, the user may add at least one content to the user-customized channel 10 by selecting at least one of the content a1, the content b1, the content c1, the content d1, and the content e1 provided from the first content providing server. The user may add the content b1 and the content d1 to the user-customized channel by selecting the content b1 and the content d1 from among the plurality of contents provided from the first content providing server. Content A in the user-customized channel 10 shown in FIG. 7 may be same with the content b1, and content B in the user-customized channel 10 may be same with the content d1.

One or more contents provided in the user-customized channel 10 may be displayed sequentially. Accordingly, one or more contents provided in the user-customized channel 10 may be sequentially played by the electronic device 140.

For example, the content A and the content B provided in the user-customized channel 10 may be displayed sequentially. Accordingly, the content A and the content B provided in the user-customized channel 10 may be sequentially played by the electronic device 140.

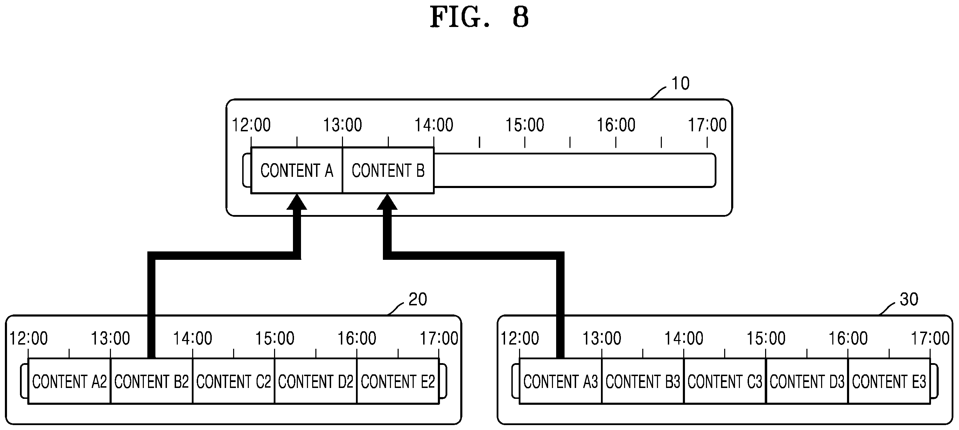

FIG. 8 is a diagram for explaining a method of adding content to a user-customized channel according to an embodiment. For convenience of explanation, repeated descriptions are briefly given or omitted.

Referring to FIG. 8, according to an embodiment, the channel service server computer 120 may receive the first content meta data list 20 and a second content metadata list 30 including metadata corresponding to one or more contents from the plurality of content providing servers 110, respectively. The first content meta data list 20 and the second content metadata list 30 may include genre information, broadcast time information, and content information for contents provided from the respective content providing servers.

The content providing servers may respectively broadcast a plurality of content sequentially over time. For example, the content providing servers may each be a broadcasting station server that transmits live broadcast content through a certain channel, or may each be a streaming server that provides a live streaming video content service.

The user may check a list of contents provided from the respective content providing servers through the first content meta data list 20 and the second content metadata list 30 by accessing the channel service server computer 120. The user may check genre information, broadcast time information, and content information about the contents provided from the respective content providing servers, but this is merely an example and the technical spirit of the present disclosure is not limited thereto.

The user may create the user-customized channel 10 by accessing the channel service server computer 120 through the user device 130. The user may add the selected contents to the user-customized channel 10 by selecting at least one content from among the plurality of contents provided from the respective content providing servers.

In detail, the user may add at least one content to the user-customized channel 10 by selecting at least one of content a2, content b2, content c2, content d2, and content e2 provided from the first content providing server. The user may add at least one content to the user-customized channel 10 by selecting at least one of content a3, content b3, content c3, content d3, and content e3 provided from the second content providing server.

The user may add the content b2 and the content a3 to the user-customized channel 10 by selecting the content b2 from among the plurality of contents provided from the first content providing server and the content a3 from among the plurality of contents provided from the second content providing server. The content A in the user-customized channel 10 shown in FIG. 8 may be same with the content b2, and the content B in the user-customized channel 10 may be same with the content a3.

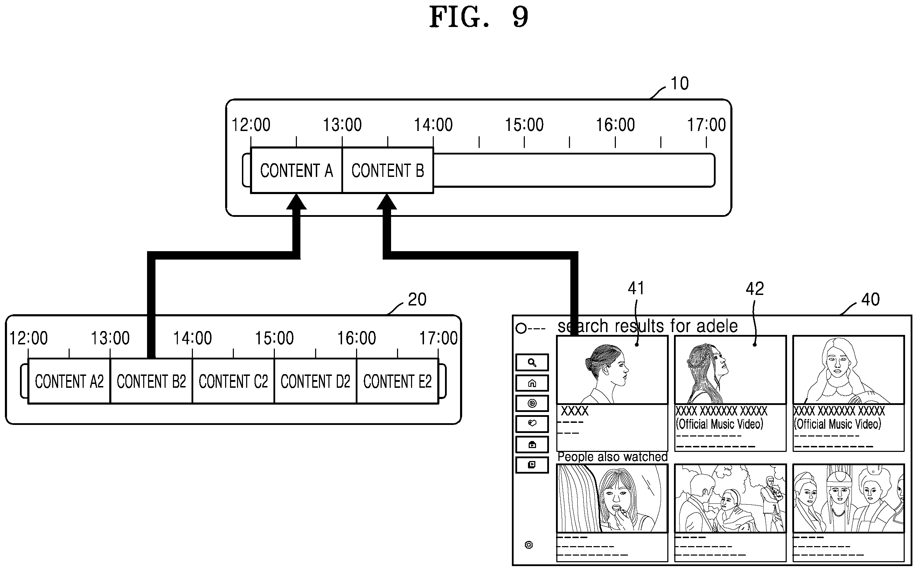

FIG. 9 is a diagram for explaining a method of adding content to a user-customized channel according to an embodiment. For convenience of explanation, repeated descriptions are briefly given or omitted.

Referring to FIG. 9, according to an embodiment, the channel service server computer 120 may receive the first content meta data list 20 and a third content metadata list 40 including metadata corresponding to one or more contents from the plurality of content providing servers 110. The first content meta data list 20 and the third content metadata list 40 may include genre information, playback time information, and content information for contents provided from the respective content providing servers.

The first content providing server that provides the first content meta data list 20 may broadcast a plurality of contents sequentially over time. For example, the first content providing server may be a broadcasting station server that transmits live broadcast content through a certain channel, or may be a streaming server that provides a live streaming video content service.

The third content providing server that provides the third content metadata list 40 may provide a video service for playing one or more contents selected according to user input. For example, the third content providing server may be an OTT service providing server that provides media content through an OTT service, or may be a streaming server that provides VOD content.

The user may check a list of contents provided from the respective content providing servers through the first content meta data list 20 and the third content metadata list 40 by accessing the channel service server computer 120. The user may check genre information, playback time information, and content information about the contents provided from the content providing servers, but the information about the content is merely an example and the technical spirit of the present disclosure is not limited thereto.

The user may create the user-customized channel 10 by accessing the channel service server computer 120 through the user device 130. The user may add the selected contents to the user-customized channel 10 by selecting at least one content from among the plurality of contents provided from the respective content providing servers.

In detail, the user may add at least one content to the user-customized channel 10 by selecting at least one of the content a2, the content b2, the content c2, the content d2, and the content e2 provided from the first content providing server. The user may add at least one content to the user-customized channel 10 by selecting at least one of a plurality of contents (e.g., 41 and 42) provided from the third content providing server.

The user may add the content b2 and the one content 41 to the user-customized channel 10 by selecting the content b2 from among the plurality of contents provided from the first content providing server and the one content 41 from among the plurality of contents provided from the third content providing server. The content A in the user-customized channel 10 shown in FIG. 9 may be same with the content b2, and the content B in the user-customized channel 10 may be same with the one content 41.

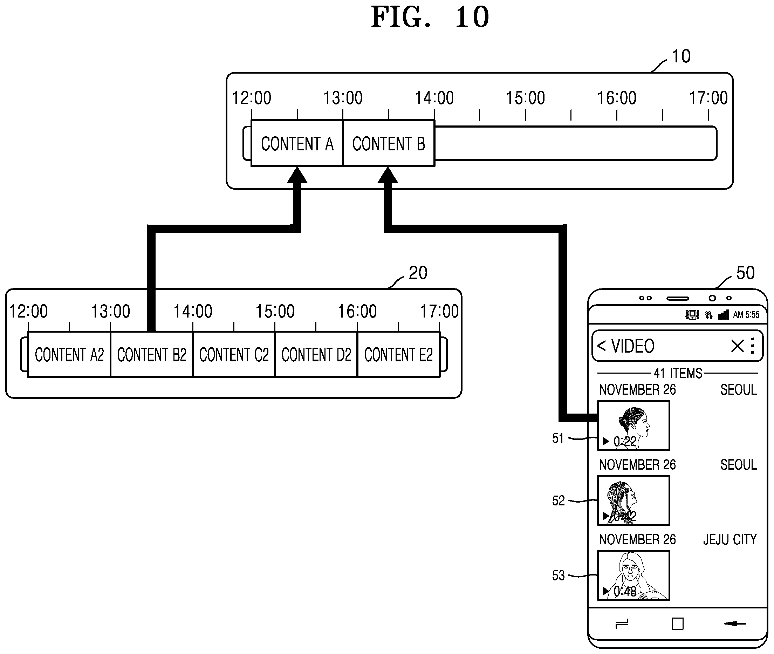

FIG. 10 is a diagram for explaining a method of adding content to a user-customized channel according to an embodiment. For convenience of explanation, repeated descriptions are briefly given or omitted.

Referring to FIG. 10, according to an embodiment, the channel service server computer 120 may receive a first content meta data list 20 including metadata corresponding to one or more contents from the first content providing server from among the one or more content providing servers 110. The channel service server computer 120 may receive a fourth content metadata list 50 by uploading video content from the user device 130. The first content meta data list 20 may include genre information, broadcast time information, and content information about content provided from the first content providing server. The fourth content metadata list 50 may include genre information, playback time information, and content information about video content uploaded from the user device 130.

The user device 130 may provide a service for playing one or more contents selected according to a user input by providing the fourth content metadata list 50 to the channel service server computer 120.

The user may check a list of contents provided from the first content providing server and the user device 130 through the first content meta data list 20 and the fourth content metadata list 50 by accessing the channel service server computer 120. The user may check genre information, time information, and content information about the content provided from the first content providing server and the user device 130, but the information about the content is merely an example and the technical spirit of the present disclosure is not limited thereto.

The user may create the user-customized channel 10 by accessing the channel service server computer 120 through the user device 130. The user may add the selected contents to the user-customized channel 10 by selecting at least one content from among the plurality of contents that are respectively provided from the content providing servers and the user device 130.

In detail, the user may add at least one content to the user-customized channel 10 by selecting at least one of the content a2, the content b2, the content c2, the content d2, and the content e2 provided from the first content providing server. The user may add at least one content to the user-customized channel 10 by selecting at least one of a plurality of contents 51, 52, and 53 from a video content list 50 stored in the user device 130.

The user may add the content b2 and the one content 51 to the user-customized channel 10 by selecting the content b2 from among the plurality of contents provided from the first content providing server and the one content 51 from among the plurality of contents 51, 52, and 53 provided from the video content list 50 stored in the user device 130. The content A in the user-customized channel 10 shown in FIG. 10 may be same with the content b2, and the content B in the user-customized channel 10 may be same with the one content 51.

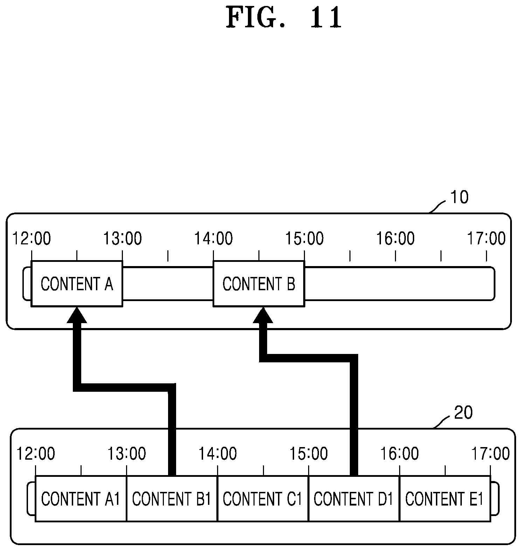

FIG. 11 is a diagram for explaining a method of arranging contents in a user-customized channel according to an embodiment.

Referring to FIG. 11, each of the one or more contents provided in the user-customized channel is displayed at its preset designated time. Accordingly, a certain time may be selected and one or more contents provided in the user-customized channel 10 may be played through the electronic device 140 at the certain time.

For example, the user may add the content b1 and the content d1 to the user-customized channel by selecting the content b1 and the content d1 provided in the first content meta data list 20 provided from the first content providing server. The content A in the user-customized channel 10 shown in FIG. 11 may be same with the content b1, and the content B in the user-customized channel 10 may be same with the content d1. The content A may be designated to be played at 12 o'clock, and the content B may be designated to be played at 14 o'clock.

The first content meta data list 20 provided from the first content providing server may include information about 1 hour of the content A and 1 hour of the content B. Accordingly, after the content A ends and before the content B begins to be played, no content may be played.

However, the playback time and arrangement of content are merely examples and do not limit the technical spirit of the present disclosure.

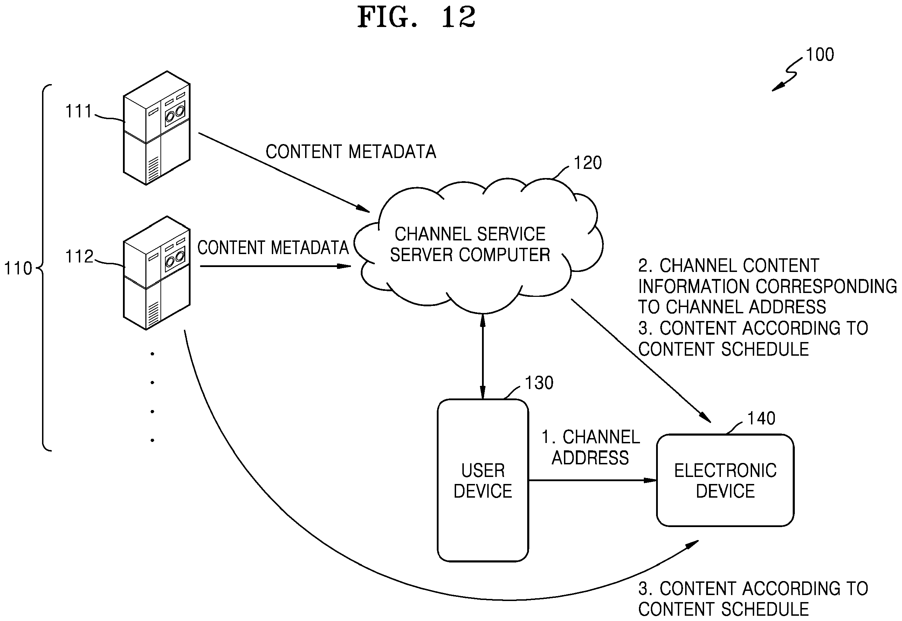

FIG. 12 is a schematic diagram showing an example of a system for playing a video according to an embodiment. For convenience of explanation, repeated descriptions of the description given with reference to FIG. 1 will be briefly described or omitted.

Referring to FIG. 12, according to an embodiment, a user may create a user-customized channel by accessing the channel service server computer 120 by using the user device 130. A user may input a content schedule for providing one or more contents to the user-customized channel by using the user device 130.

The electronic device 140 may receive the user-customized channel from the user device 130 and receive content from the one or more content providing servers 110 according to the content schedule in the received user-customized channel. Alternatively, the electronic device 140 may receive content from one of the channel service server computer 120 and the user device 130 according to the content schedule in the user-customized channel.

The electronic device 140 may receive the channel address data from the user device 130. The channel address data may correspond to the user-customized channel. Accordingly, the electronic device 140 may receive information about the user-customized channel corresponding to the channel address data from the channel service server computer 120. In detail, the electronic device 140 may obtain a content schedule of one or more contents provided through the user-customized channel from the channel service server computer 120 with reference to address data for the user-customized channel.

The electronic device 140 may receive content from one or more content providers with reference to the content schedule to provide one or more content in the user-customized channel according to the content schedule. According to an embodiment, the electronic device 140 may obtain the one or more contents from a channel service server computer and a broadcasting station server or a streaming server to which video content is uploaded by the user, according to the content schedule.

For example, the electronic device 140 may directly receive content from one or more content providing servers 110 according to the content schedule. In detail, the electronic device 140 may receive live broadcast content from the broadcasting station server according to the content schedule or receive VOD content from the streaming server according to the content schedule.

As another example, the electronic device 140 may receive content from the channel service server computer 120 according to the content schedule. The electronic device 140 may receive content received and stored by the channel service server computer 120 from the one or more content providing servers 110 according to the content schedule.

As another example, the electronic device 140 may receive content from the user device 130 according to the content schedule. The electronic device 140 may receive video content stored in the user device 130 according to the content schedule.

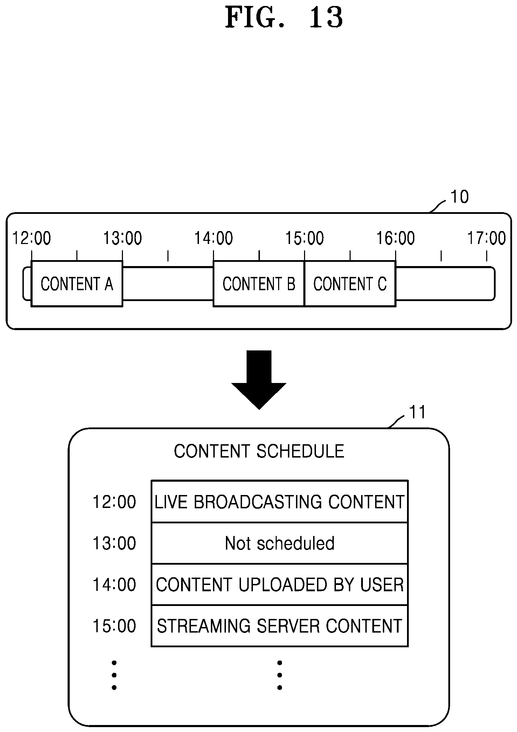

FIG. 13 is a diagram for explaining a schedule of contents provided through a user-customized channel according to an embodiment. For convenience of explanation, repeated descriptions of the description given with reference to FIGS. 7 to 11 will be briefly described or omitted.

For reference, FIG. 13 is a diagram illustrating the user-customized channel 10 and a schedule 11 of contents provided therethrough.

Referring to FIG. 13, the electronic device 140 may display one or more contents according to a content schedule 11 of the user-customized channel 10.

According to an embodiment, the user-customized channel 10 may include one or more content (e.g., content A, content B, and content C) according to the content schedule 11. A time at which content in the user-customized channel 10 is provided and a type of content provider may be determined. The user-customized channel 10 may include the content A, the content B, and the content C according to the content schedule 11.

According to an embodiment, the electronic device 140 may include the user-customized channel 10 as a portion of program guide information provided by the electronic device 140 and display the user-customized channel 10.

According to an embodiment, when the electronic device 140 receives a user input for selecting the user-customized channel 10 provided in the displayed program guide information, the electronic device 140 may display one or more contents provided in the user-customized channel 10. For example, the user-customized channel 10 may display live broadcast content A at 12 o'clock, display content B uploaded by the user at 14 o'clock, and display streaming server content C at 15 o'clock. The electronic device 140 may sequentially access and display the contents A, B, and C according to the content schedule provided in the user-customized channel 10 according to a user input for selecting the user-customized channel 10.

The electronic device 140 may control a tuner to switch a source that provides an image to the electronic device 140 to a broadcasting station server to display the live broadcast content A at 12 o'clock. That is, the electronic device 140 may obtain a channel number of the broadcasting station server that transmits the corresponding live broadcast content A, control the tuner according to the obtained channel number, and display the content received from the tuner.

Subsequently, at 14 o'clock, the electronic device 140 may control a communication module to switch the source that provides an image to the electronic device 140 to a server to which the content B is uploaded to display the content B uploaded by the user. That is, the electronic device 140 may obtain address of a server to which the content B is uploaded, for example, address information of the channel service server computer 120. The electronic device 140 may access the channel service server computer 120 by using the obtained address information. The electronic device 140 may receive the content B from the channel service server computer 120 through a communication interface and display the content B.

Subsequently, at 15 o'clock, the electronic device 140 may control the communication module to switch the source that provides an image to the electronic device 140 to the streaming server providing a streaming service to display the streaming server content C. That is, the electronic device 140 may obtain address information of the streaming server providing a streaming service for the content C. The electronic device 140 may access the streaming server by using the obtained address information. The electronic device 140 may receive the content C from the streaming server through a communication interface and display the content C.

As such, the user-customized channel according to embodiments of the present disclosure may include content from various input sources. Accordingly, to display content from these various input sources, the electronic device may automatically switch the input source from which the content is to be obtained to access the content at a scheduled time. The electronic device may obtain and display content from the switched input source by using content address information. As such, the user may automatically receive desired content from one channel without having to change a channel number or manually change an input source to maximize user convenience by collecting and scheduling contents desired by the user on one channel.

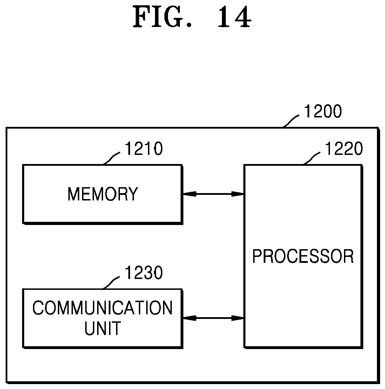

FIG. 14 is a block diagram of an electronic device according to an embodiment. An electronic device 1200 may correspond to the electronic device 140 described above with reference to FIGS. 1 to 11, and thus repeated descriptions of those of FIGS. 1 to 11 are omitted.

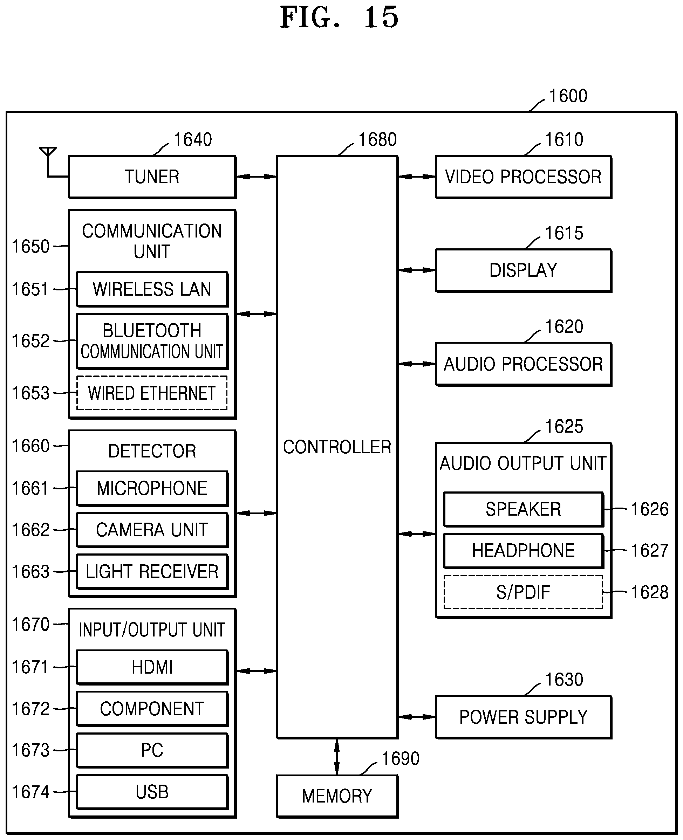

Referring to FIG. 14, the electronic device 1200 according to some embodiments may include a memory 1210, a processor 1220, and a communication unit 1230. However, the components shown in FIG. 14 are not required components of the electronic device 1200. The electronic device 1200 may be implemented with more components than those shown in FIG. 14, or the electronic device 1200 may be implemented with fewer components than the components shown in FIG. 14. For example, as shown in FIG. 15, the electronic device 1200 according to some embodiments may include more components.

The electronic device 1200 includes the communication unit 1230 that communicates with a plurality of different servers, the memory 1210 that stores one or more instructions, and at least one processor 1220 that executes one or more instructions stored in the memory, and the at least one processor 1220 receives address information for the user-customized channel from the user device 130 by executing the one or more instructions. The at least one processor 1220 obtains information on one or more contents provided in the user-customized channel from the channel service server computer 120 with reference to address information for the user-customized channel according to a user input for selecting the user-customized channel. The at least one processor 1220 displays one or more contents with reference to information about the one or more contents.

The one or more contents provided in the user-customized channel may include at least one of live broadcast content transmitted from a broadcasting station server, VOD content provided by a streaming server, and live streaming video content provided by a streaming server, and video content uploaded to a channel service server computer by a user.

The processor 1220 may control the overall operation of the electronic device 1200. In detail, the processor 1220 may receive address information for the user-customized channel from the user device 130 or the channel service server computer 120 through the communication unit 1230 and receive information about one or more contents provided in the user-customized channel from the channel service server computer 120 through the communication unit 1230. The processor 1220 may use content metadata and user metadata previously stored in the memory 1210 of the electronic device 1200.

FIG. 15 is a block diagram illustrating in detail the configuration of an electronic device according to an embodiment.

An electronic device 1600 may correspond to the electronic device 140 or the electronic device 1200 described above with reference to FIGS. 1 to 14.

Referring to FIG. 15, the electronic device 1600 according to an embodiment may include a memory 1690, a controller 1680, and a communication unit 1650, which correspond to the memory 1210, the processor 1220, and the communication unit 1230 of the electronic device 1200, respectively. The controller 1680 according to some embodiments may include at least one processor 1220 of FIG. 14, and thus repeated descriptions of FIG. 14 are omitted.

Referring to FIG. 15, the display device 1600 includes a video processor 1610, a display 1615, an audio processor 1620, an audio output unit 1625, a power supply 1630, a tuner 1640, the communication unit 1650, a detector 1660, an input/output unit 1670, the controller 1680, and the memory 1690.

The display 1615 displays video provided in the broadcast signal received through the tuner 1640 on a screen under control of the controller 1680. The display 1615 may display content (e.g., VOD content) input through the communication unit 1650 or the input/output unit 1670.

The display 1615 may output an image stored in the memory 1690 under control of the controller 1680. In addition, the display 1615 may display a voice user interface (Ul) (e.g., including a voice instruction guide) for performing a voice recognition task corresponding to voice recognition or a motion UI (e.g., including a user motion guide for motion recognition) for performing a motion recognition task corresponding to motion recognition.

The display 1615 may display and output information processed by the electronic device 1600. In detail, the display 1615 may display one or more contents provided in the user-customized channel. The display 1615 may display and output information processed by the terminal 1600. When the display 1615 and a touch pad constitute a layer structure to form a touch screen, the display 1615 may be used as an input device in addition to an output device.

The audio output unit 1625 may output audio data received from the communication unit 1650 or stored in the memory 1690.

The audio output unit 1625 outputs audio provided in the broadcast signal received through the tuner 1640 under control of the controller 1680. The audio output unit 1625 may output content (e.g., voice or sound) input through the communication unit 1650 or the input/output unit 1670. The audio output unit 1625 may output audio stored in the memory 1690 under control of the controller 1680. The audio output unit 1625 may include at least one of a speaker 1626, a headphone output terminal 1627, or a Sony/Philips digital interface (S/PDIF) output terminal 1628. The audio output unit 1625 may include a combination of the speaker 1626, the headphone output terminal 1627, and the S/PDIF output terminal 1628.

The power supply 1630 supplies power input from an external power source to the components 1610 to 1690 inside the display device 1600 under control of the control unit 1680. The power supply 1630 may supply power output from one or two or more batteries (not shown) located inside the electronic device 1600 to the internal components 1610 to 1690 under control of the controller 1680.

The tuner 1640 may tune and select a frequency alone of a channel to be received by the display device 1600 from among many radio wave components through amplification, mixing, resonance, or the like of a broadcast signal received by wire or wirelessly. The broadcast signal includes audio, video, and additional information (e.g., electronic program guide (EPG)).

The tuner 1640 may receive a broadcast signal in a certain frequency band according to an external input (e.g., a received control signal, such as an external input such as HDMI, DVI, or DP). Here, the external input is a control signal received from an external control device (not shown) or a remote controller (not shown), for example, channel number input, channel up-down input, and channel input in EPG screen.

The tuner 1640 may receive broadcast signals from various sources, such as terrestrial broadcasting, cable broadcasting, satellite broadcasting, and Internet broadcasting. The tuner 1640 may also receive broadcast signals from sources such as analog broadcasting or digital broadcasting. The broadcast signal received through the tuner 1640 is decoded (e.g., audio decoding, video decoding, or additional information decoding) and separated into audio, video, and/or additional information. The separated audio, video, and/or additional information may be stored in the memory 1690 under control of the controller 1680.

The electronic device 1600 may have one or more tuners 1640. According to an embodiment, when the tuner 1640 is provided in a plurality of tuners, a plurality of broadcast signals may be output to a plurality of windows constituting a multi-window screen provided on the display 1615.

The tuner 1640 may be implemented as an all-in-one unit with the display device 1600, or may be implemented as a separate device (e.g., a set-top box (not shown) or a tuner (not shown) connected to the input/output unit 1670) having a tuner electrically connected to the display device 1600.

The communication unit 1650 may connect the display device 1600 with an external device (e.g., an audio device) under control of the controller 1680. The controller 1680 may transmit/receive address information for the user-customized channel, certain information about one or more contents provided in the user-customized channel, or certain content to/from a connected external device through the communication unit 1650 and download or web-browse an application from the external device.

As described above, the communication unit 1650 may include at least one of a short-range communication module (not shown), a wired communication module (not shown), and a mobile communication module (not shown).

FIG. 15 illustrates an example in which the communication unit 1650 includes one of wireless LAN 1651, Bluetooth 1652, and wired Ethernet 1653.

The communication unit 1650 may include a combination of the wireless LAN 1651, the Bluetooth 1652, and the wired Ethernet 1653. The communication unit 1650 may receive a control signal from a control device (not shown) under control of the controller 1680. The control signal may be implemented in a Bluetooth type, an RF signal type, or a Wi-Fi type.

In addition to Bluetooth, the communication unit 1650 may further include other short-range communication (e.g., near field communication (NFC) (not shown), or a separate Bluetooth low energy (BLE) (not shown)).

In FIG. 15, the tuner 1640 and the communication unit 1650 have a configuration corresponding to the communication unit 1230 of FIG. 14, and the communication unit 1650 may further include the tuner 1640.

The detector 1660 detects user voice, user images, or user interaction.

A microphone 1661 receives uttered voice of the user. The microphone 1661 may convert the received voice into an electrical signal and output the electrical signal to the controller 1680. The user voice may include, for example, a voice corresponding to a menu or function of the electronic device 1600. For example, a recognition range of the microphone 1661 may be recommended to be within 4 m from the microphone 1661 to a location of the user, and the recognition range of the microphone 1661 may vary according to the size of the user voice and a surrounding environment (e.g., speaker sound or ambient noise).

The microphone 1661 may be implemented integrally with or separately from the electronic device 1600. The separated microphone 1661 may be electrically connected to the display device 1600 through the communication unit 1650 or the input/output unit 1670.

It will be easily understood by those skilled in the art that the microphone 1661 may be excluded depending on the performance and structure of the electronic device 1600.

A camera unit 1662 receives images (e.g., consecutive frames) corresponding to user motion including a gesture within the camera recognition range. For example, the recognition range of the camera unit 1662 may be within 0.1 to 5 m from the camera unit 1662 to the user. The user motion may include, for example, a part of a user body such as the face, facial expression, hand, fist, or finger, or the motion of the part of the user. The camera unit 1662 may convert the received image into an electrical signal under control of the controller 1680 and output the electrical signal to the controller 1680.

The controller 1680 may select a menu displayed on the electronic device 1600 or perform control corresponding to the motion recognition result by using the received motion recognition result. For example, this may include channel adjustment, volume adjustment, and indicator movement.

The camera unit 1662 may include a lens (not shown) and an image sensor (not shown). The camera unit 1662 may support optical zoom or digital zoom by using a plurality of lenses and image processing. The recognition range of the camera unit 1662 may be set in various ways depending on an angle of a camera and surrounding environmental conditions. When the camera unit 1662 includes a plurality of cameras, a three-dimensional still image or a three-dimensional motion may be received using the plurality of cameras.

The camera unit 1662 may be implemented integrally with or separately from the electronic device 1600. A separate device (not shown) including a separate camera unit 1662 may be electrically connected to the electronic device 1600 through the communication unit 1650 or the input/output unit 1670.

It will be easily understood by those skilled in the art that the camera unit 1662 may be excluded depending on the performance and structure of the electronic device 1600.

A light receiver 1663 receives an optical signal (including a control signal) received from an external control device (not shown) through a light window (not shown) of a bezel of the display 1615. The light receiver 1663 may receive an optical signal corresponding to a user input (e.g., touch, press, touch gesture, voice, or motion) from a control device (not shown). A control signal may be extracted from the received optical signal under control of the controller 1680.

For example, the light receiver 1663 may receive a signal corresponding to a pointing position of a control device (not shown) and transmit the signal to the controller 1680. For example, when a user interface screen for receiving data or commands from the user is output through the display 1615 and the user intends to input data or commands to the electronic device 1600 through a control device (not shown), the light receiver 1663 may receive a signal corresponding to a motion of the control device (not shown) and transmit the signal to the controller 1680 if the user moves the control device (not shown) while touching a touch pad (not shown) provided on the control device (not shown) with the finger of the user. The light receiver 1663 may receive a signal indicating that a certain button provided in the control device (not shown) is pressed and transmit the signal to the controller 1680. For example, when the user presses a button-type touch pad (not shown) on a control device (not shown) with his or her finger, the light receiver 1663 may receive a signal indicating that the button-type touch pad (not shown) is pressed and transmit the signal to the controller 1680. For example, a signal indicating that the button-type touch pad (not shown) is pressed may be used as a signal to select one of items.

The input/output unit 1670 receives video (e.g., video), audio (e.g., voice or music), and additional information (e.g., EPG) from the outside of the electronic device 1600 under control of the controller 1680. The input/output unit 1670 may include one of a high-definition multimedia interface (HDMI) port 1671, a component jack 1672, a PC port 1673, and a USB port 1674. The input/output unit 1670 may include a combination of the HDMI port 1671, the component jack 1672, the PC port 1673, and the USB port 1674.

It will be easily understood by those skilled in the art that the configuration and operation of the input/output unit 1670 may be implemented in various ways according to embodiments of the present disclosure.

The controller 1680 controls the overall operation of the electronic device 1600 and signal flow between internal components (not shown) of the electronic device 1600 and performs a function of processing data. When there is a user input or a preset and stored condition is satisfied, the controller 1680 may execute an operating system (OS) and various applications stored in the memory 1690.

The controller 1680 may include RAM (not shown) used as a storage region that stores signals or data input from the outside of the electronic device 1600 or corresponds to various tasks performed in the electronic device 1600, ROM (not shown) in which a control program for control of the electronic device 1600 is stored, and a processor (not shown).

The processor (not shown) may include a graphics processor (not shown) for graphics processing corresponding to video. The processor (not shown) may be implemented as a system on chip (SoC) that integrates a core (not shown) and a GPU (not shown). The processor (not shown) may include a single core, a dual core, a triple core, a quad core, and multiple cores thereof.

The processor (not shown) may be provided in a plurality of processors. For example, the processor (not shown) may be implemented as a main processor (not shown) and a sub processor (not shown) operating in a sleep mode.

A graphics processor (not shown) creates various objects such as icons, images, and text by using a calculator (not shown) and a renderer (not shown). The calculator calculates an attribute value such as coordinates, shape, size, and color for each object to be displayed according to a layout of an screen by using a user interaction detected through a detector (not shown). The renderer creates screens with various layouts including objects based on the attribute values calculated by the calculator. The screen created by the renderer is displayed within a display area of the display 1615.

The components of the electronic device 1600 shown in FIG. 15 is an example, and the components of the electronic device 1600 may be integrated, added, or omitted depending on the specifications of an implemented terminal. That is, as necessary, two or more components may be combined into one component, or one component may be subdivided into two or more components. Functions performed by each component (or module) are for explaining the embodiments, and detailed operations or devices do not limit the scope of the present disclosure.

An operation method of an electronic device according to an embodiment may be implemented in the form of program commands to be executed through various computer devices and recorded in a computer-readable medium. The computer readable medium can store program commands, data files, data structures or combinations thereof. The program commands recorded in the medium may be specially designed and configured for the present disclosure or be known to those skilled in the field of computer software. Examples of a computer readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include a machine language code created by a compiler and a high-level language code executable by a computer using an interpreter and the like.

Although the embodiments have been described in detail above, the scope of the present disclosure is not limited thereto, and various modifications and improvements made by those skilled in the art using a basic concept of the present disclosure defined in the following claims are also included in the scope of the present disclosure.

## Claims

1. An electronic device comprising:
a display;
a memory configured to store one or more instructions; and
a processor configured to execute the one or more instructions stored in the memory,
wherein the processor is configured to execute the one or more instructions to receive address information for a user-customized channel from a user device, obtain information about one or more contents provided in the user-customized channel from a channel service server computer with reference to the address information for the user-customized channel according to a user input for selecting the user-customized channel, and display the one or more contents with reference to the information about the one or more contents, and
the one or more contents provided in the user-customized channel include at least one of live broadcast content transmitted from a broadcasting station server, video on demand (VOD) content provided by a streaming server, and live streaming video content provided by the streaming server, and video content uploaded to the channel service server computer by the user.

2. The electronic device of claim 1, wherein the address information for the user-customized channel includes uniform resource locator (URL) information.

3. The electronic device of claim 1, wherein the processor is configured to execute the one or more instructions to obtain a content schedule of the one or more contents provided through the user-customized channel from the channel service server computer with reference to the address information for the user-customized channel and obtain the one or more contents from the channel service server computer to which the video content is uploaded by the user, the broadcasting station server, or the streaming server according to the content schedule.

4. The electronic device of claim 1, wherein the user device includes a first user device and a second user device,
the user-customized channel is generated by accessing the channel service server computer through the first user device, and
the processor is configured to execute the one or more instructions to receive the address information for the user-customized channel from the channel service server computer through the second user device.

5. The electronic device of claim 1, wherein the processor is configured to execute the one or more instructions to directly receive the address information for the user-customized channel from the channel service server computer and obtain information about the one or more contents provided in the user-customized channel from the channel service server computer with reference to the address information for the user-customized channel according to the user input for selecting the user-customized channel.

6. The electronic device of claim 1, wherein the user device includes a first user device and a second user device,
the user-customized channel is created by accessing the channel service server computer through the first user device,
the address information for the user-customized channel is shared from the channel service server computer to the second user device through the first user device, and
the processor is configured to execute the one or more instructions to receive the shared address information for the user-customized channel from the second user device.

7. The electronic device of claim 1, wherein user authentication (log in) is requested from an authentication server to access the user device granted access to the electronic device, and
information about the one or more contents provided in the user-customized channel is synchronized through the user device.

8. The electronic device of claim 7, wherein requesting user authentication from the authentication server includes requesting authentication based on a single sign on (SSO) server.

9. The electronic device of claim 1, wherein the one or more contents provided in the user-customized channel are sequentially displayed.

10. The electronic device of claim 9, wherein each of the one or more contents provided in the user-customized channel is displayed at its preset designated time.

11. An operation method of an electronic device, the operation method comprising:
receiving address information for a user-customized channel from a user device;
obtaining information about one or more contents provided in the user-customized channel from a channel service server computer with reference to the address information for the user-customized channel according to a user input for selecting the user-customized channel; and
displaying the one or more contents with reference to the information about the one or more contents,
wherein the one or more contents provided in the user-customized channel include at least one of live broadcast content transmitted from a broadcasting station server, video on demand (VOD) content provided by a streaming server, and live streaming video content provided by the streaming server, and video content uploaded to the channel service server computer by the user.

12. The operation method of claim 11, wherein the obtaining of the information about the one or more contents provided in the user-customized channel includes:
obtaining a content schedule of the one or more contents provided through the user-customized channel from the channel service server computer with reference to the address information for the user-customized channel;
and
obtaining the one or more contents from the channel service server computer to which the video content is uploaded by the user, the broadcasting station server, or the streaming server according to the content schedule.

13. The operation method of claim 11, wherein the user device includes a first user device and a second user device,
the user-customized channel is created by accessing the channel service server computer through the first user device, and
the receiving of the address information for the user-customized channel includes receiving the address information for the user-customized channel from the channel service server computer through the second user device.

14. The operation method of claim 11, wherein the user device includes a first user device and a second user device,
the user-customized channel is created by accessing the channel service server computer through the first user device, and
the receiving of the address information for the user-customized channel includes
sharing the address information for the user-customized channel from the channel service server computer to the second user device through the first user device.

15. The operation method of claim 11, wherein the obtaining of the information about the one or more contents includes:
requesting user authentication from an authentication server to access the user device granted access to the electronic device; and
synchronizing information about the one or more contents provided in the user-customized channel through the user device.
